# EUROPEAN PATENT APPLICATION

(11) **EP 2 109 110 A1**
(43) Date of publication of application: **14.10.2009**
(21) Application number: 09157672.8
(22) Date of filing: 09.04.2009
(51) Int. Cl.: G11B 33/00, G03B 17/02, G03B 17/56, G11B 19/02, G11B 31/00

(54) **Clip-on recording device**

(30) Priority: 09.04.2008 US 43405 P
(71) Applicant: IDT Electronic Products Limited, Hong Kong (HK)
(72) Inventor: Chan, Raymond, Hong Kong (CN); Boothby, Iain Arthur James, Hong Kong (CN)
(74) Representative: Schweiger, Martin

(57) **Abstract**

A clip-on electronic recording device with an automatic activation mechanism is disclosed. When a coupling member coupled to the recording device is clipped onto a clothing accessory of a user, the coupling member activates the recording device automatically. In one embodiment, the recording device has a magnet switch that is activated by a magnet in the coupling member when it is clipped. In another embodiment, a mechanical switch is closed when the coupling member physically pushes into the electronic recording module.

## Description

### CROSS-REFERENCE TO RELATED APPLICATION

This application claims benefit under 35 U.S.C. § 119(e) of U.S. Provisional Application having Serial No. 61/043,405 filed Apr. 9, 2008, which is hereby incorporated by reference herein in its entirety.

### FIELD OF INVENTION

This invention relates to an electronic recording device, and in particular an electronic recording device with an automatic activation mechanism.

### BACKGROUND OF INVENTION

It is often useful to have a record of any potential crime or action scene at the earliest possible time upon arrival of the relevant officials, such as policemen, firemen, guards or referee. However, confusion on the scene may cause the official to forget to switch on the relevant recording device. A very busy situation may also prevent the official from taking out his equipment and getting it ready for recording.

### SUMMARY OF INVENTION

In the light of the foregoing background, it is an object of the present invention to provide an alternate electronic recording device.

Accordingly, the present invention, in one aspect, is an electronic recording device comprising an electronic recording module with a switching mechanism and a coupling member coupled to the switching mechanism of the electronic recording device. The coupling member activates the electronic recording device via the switching mechanism automatically when the coupling member is clipped to a clothing accessory of a user.

In an exemplary embodiment of the present invention, the switching mechanism of the electronic recording device comprises a magnet switch and the coupling member comprises a magnet. The magnet activates the electronic recording device by closing the magnet switch automatically when the coupling member is clipped to the clothing accessory of the user.

The electronic recording device of this invention simplifies the operation of the device by automatically activating itself when the device is clipped to the clothing accessory of a user. In one embodiment, the recording function is also automatically activated at the same time. It means that the device according to the present invention merges the attaching, switching on and activating the recording function into one single step by the user.

In one embodiment, the coupling member comprises an attachment member that is attached to the clothing accessory and a clipping member that is attached to the electronic recording module. Having an attachment member that is fixed to the clothing accessory by default gives a marker to the user to help the user to attach the recording device at roughly the same location every time. When the clipping member is clipped to the attachment member, the recording device must be at the same location with respect to the user provided that the clothing is worn the same way every time.

Even though the magnetic force from the magnet does not have significant effect in holding the electronic recording module in place, it facilitates the clipping process by providing a magnetic force to guide the clipping member into place. When the clipping member is in the proximity of the attachment member, the magnet pulls the magnet switch of opposite polarity towards it. This force helps the user to locate the attachment member easier for clipping.

According to another aspect of the present invention, an alternative electronic recording device is provided comprising an electronic recording module, an attachment member adapted for secure attachment to a clothing accessory of a user, and a clipping member attached to the electronic recording module for clipping the electronic recording module to the attachment member. The electronic recording device also comprises a positioning mechanism having a first portion provided on the clipping member and a corresponding portion provided on the attachment member. The positioning mechanism is further provided with a plurality of selectable coupling positions between the first portion and the corresponding portion in a way that coupling the clipping member onto the attachment member automatically secures the electronic device onto the clothing accessory of the user in a predetermined coupling position among the plurality of selectable coupling positions. These selectable coupling positions may correspond to preferred recording positions that are suitable for the type of device and type of accessory according to the user's requirements.

In another embodiment, the positioning mechanism further comprises a plurality of markers to show which of the selectable coupling positions is selected by the user to be the predetermined coupling position.

When a user attaches a device onto the clothing accessory, the position and orientation is usually different each time the device is clipped on. However, the position and orientation of a recording device is especially important for recording scenes in a specific direction, for example in front of a user, such as a policeman for a device such as a camera. This electronic recording device allows the user to always attach the device to the clothing accessory at the same position and orientation each and every time by pre-selecting an optimal position. For example, a tall policeman may need to point the lens of the camera downwards to capture the scenes of people near him who would likely be shorter than him, while a short policeman would need to tilt the lens slightly upwards to catch the faces of the suspects/victims that he may be dealing with. Thus a fixed orientation after initial checking would avoid extra time required to check positioning of the camera again once the orientation is fixed by the attachment and clipping members.

The user can also maintain the same pre-selected orientation by using positioning markers that may be optionally provided. For example, if the clothing accessory is the hat or shirt of the user and it is taken for cleaning, the attachment member can optionally be detached during the cleaning process, and reattached without losing the orientation of the device if the device of the present invention is provided with positioning markers.

### BRIEF DESCRIPTION OF FIGURES

Fig. 1a is a side elevation view of an electronic recording module according to an exemplary embodiment, with a mounting clip attached but not shown.

Fig. 1b is a side elevation view of Fig. 1a with the mounting clip shown.

Fig. 2a is a side view of the mounting clip as shown in Fig. 1b, with of the interior structures shown with dashed lines.

Fig. 2b is a side view of an attachment frame as shown in Fig. 2a.

Fig. 3 is a perspective view of a mounting pin according to an exemplary embodiment.

Fig. 4 is a side view of the mounting pin in Fig. 3.

Fig. 5 is a front view of the mounting pin in Fig. 3.

Fig. 6 is a top view of an electronic recording device according to an exemplary embodiment, with the parts aligned for attaching.

Fig. 7 is a cross sectional view along the line C-C' of the electronic recording device in Fig. 6, showing the relevant portions only.

Fig. 8 is a side view of another exemplary embodiment according to the present invention, showing inside structure of the mounting clip.

Fig. 9 is a top view of the embodiment in Fig. 8, with the mounting pin aligned to be mated.

Fig. 10 is a side view of the exemplary embodiment as shown in Fig. 8 with the mounting pin mated.

Fig. 11 is a side elevation view of the mounting pin as shown in Fig. 9.

Fig. 12 is a side view of the structure and the mating between the mounting clip and the mounting pin, as shown from the camera side.

Fig. 13 is a cross sectional view of the embodiment as shown in Fig. 10 along the line A-A.

### DETAILED DESCRIPTION OF THE PREFERRED EMBODIMENTS

As used herein and in the claims, "comprising" means including the following elements but not excluding others.

As used herein and in the claims, "connect" refers to electrical connection either directly or indirectly via one or more electrical means and "couple" refers to direct or indirect mechanical connection unless otherwise stated.

As used herein and in the claims, "clipping" refers to any kind of mechanical attachment or coupling.

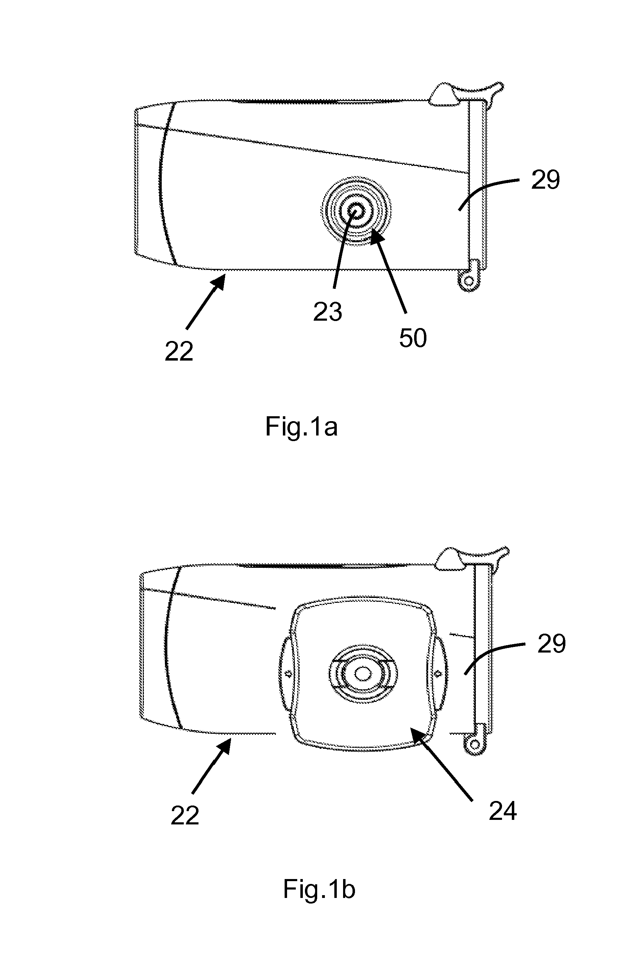

A first embodiment of the invention is illustrated in Figs. 1-7. Referring first to Figs. 1a and 1b, the electronic recording module illustrated is a video camera **22.** The video camera **22** is covered by a video camera housing **29.** A video camera housing opening **50** is provided at one side of the video camera housing **29,** and a switching mechanism shown in this embodiment as a magnet switch **23** is disposed inside the video camera housing opening **50.** The magnet switch **23** is initially in an off state. A coupling member is provided to couple to the switching mechanism. In this embodiment, the coupling member is a clipping member in the form of a mounting clip **24** as shown in Fig.1b. The mounting clip **24** is coupled and attached to the video camera **22** covering the magnet switch **23,** with its center aligned to the center of the magnet switch **23.**

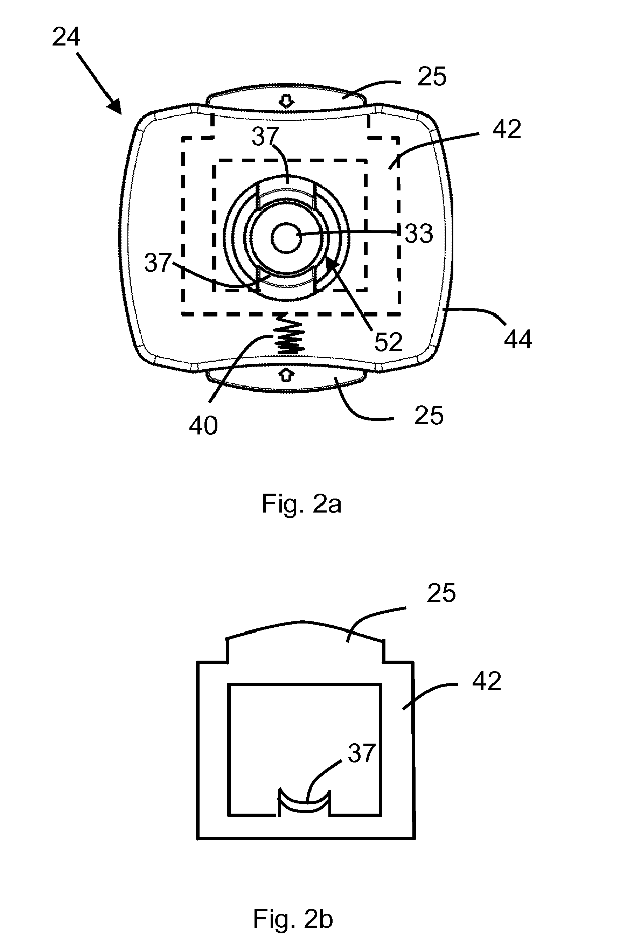

Referring now to Figs. 2a and 2b, the mounting clip **24** comprises a frame **44** which comprises two sides. One side is referred as a clipping side. The side opposing to the clipping side of the mounting clip is attached the video camera (not shown). A channel is provided at the center of the frame **44** with a channel opening **52** at one end that opens towards the clipping side of the frame **44.** At the other end of the channel opposing the channel opening **52** is disposed a magnetic button **33** attached to the magnet switch **23.** Inside the frame **44** are two hollowed attachment frames **42** which are aligned in opposing directions (only one of them are shown in Fig. 2). Each attachment frame **42** is connected to a releasing button **25** extending to the exterior of the frame **44** on one side and to an attachment knob **37** on the other side extending into the channel. As illustrated in Fig. 2b, the release button **25** at the top is connected to the attachment knob **37** at the bottom via one of the attachment frames **42.** Each attachment frame **42** is also provided with a releasing mechanism. The releasing mechanism comprises a compression spring **40** attached at one end to one attachment frame **42** at a base of the attachment knob **37,** and at the other end to the release button **25** of the opposing attachment frame **42.**

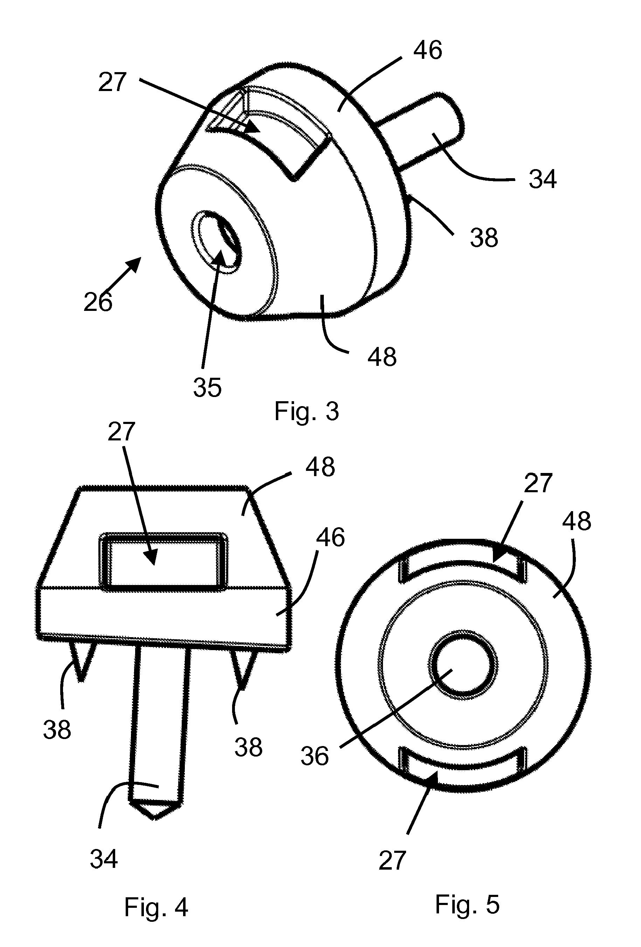

In a separate item as shown in Figs. 3-5, an attachment member that is illustrated here in this example as a mounting pin **26** comprising an attachment end and a receiving end is provided. The attachment end comprises a circular pin base **46** with a screw **34** extending out from the pin base **46.** A plurality of pins **38** extend from the periphery of the pin base **46** around the screw **34.** The receiving end comprises a locking member **48** in the shape of a truncated cone with its base affixed to the pin base **46.** A cylindrical channel **35** is provided at the center of the locking member **48** and a magnet **36** is inserted into the cylindrical channel **35** and attached to the pin base **46.** The magnet **36** is of an opposite polarity to the magnet switch **23.** Two opposing sides of the locking member **48** also contain two locking recesses **27** respectively.

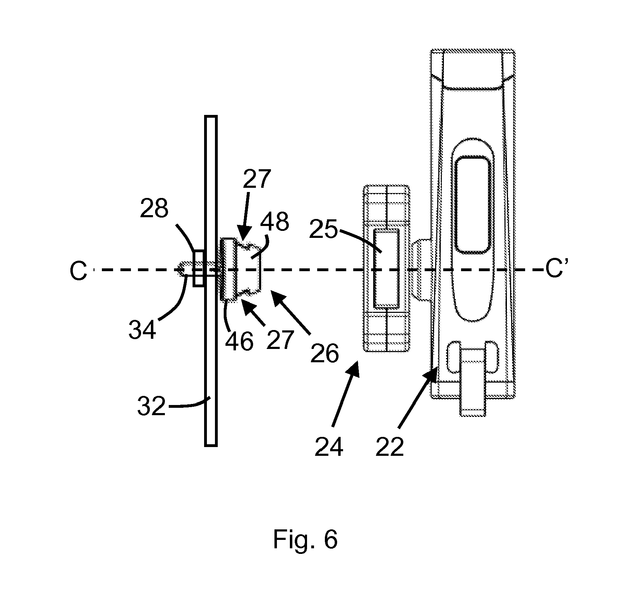

The use of the mounting pin **26** is for attaching to a clothing accessory of a user. In this embodiment, the clothing accessory is illustrated as a hat **32.** As shown in Fig. 6, the mounting pin **26** is attached to the hat **32** by inserting the screw **34** through an opening provided at the hat **32** and threading a nut **28** into the screw **34.** The plurality of pins **38** are inserted into the fiber of the hat 32 to prevent the mounting pin **26** from rotating around the screw **34.**

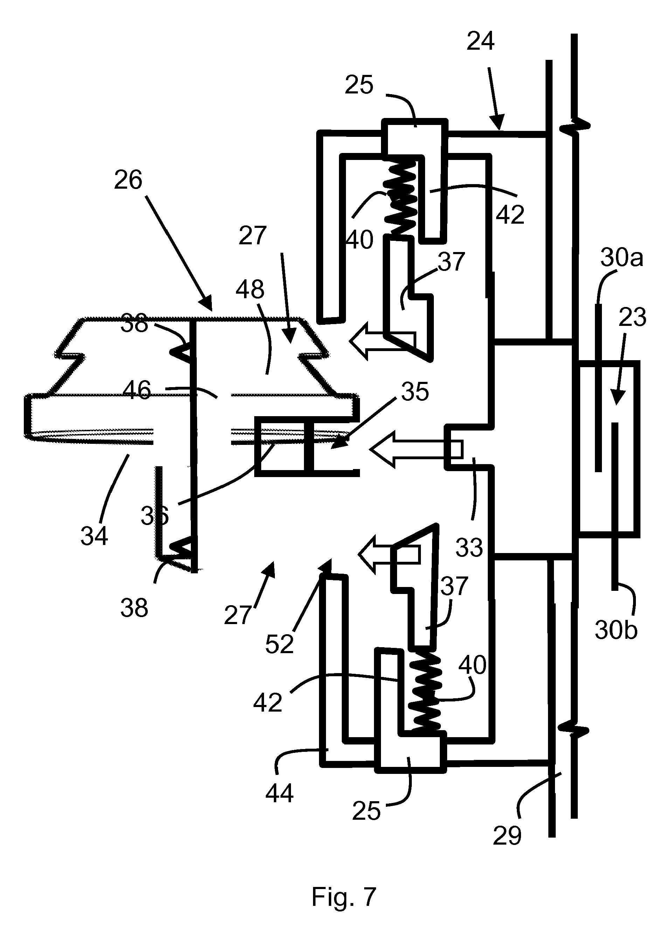

When the user wants to clip the video camera **22** onto the mounting pin **26,** the user pushes the video camera **22** and the mounting clip **24** towards the mounting pin **26.** Referring to Fig. 7, at a clipped position, the attachment knobs **37** of the mounting clip **24** mates with the locking recesses **27** of the mounting pin **26** to secure the position and lock in the orientation of the video camera **22.** The magnetic button **33** is also inserted into the cylindrical channel **35** to physically contact with the magnet **36.** The magnet **36** then closes the magnet switch **23** by pulling a movable magnetic member **30b** towards a fixed conductive member **30a** by magnetic force until they are in contact to produce an on state. The circuitry of the video camera **22** is configured such that the closing of magnet switch **23** activates the video camera **22.** In one embodiment, the closing of magnet switch **23** also starts a recording process of the video camera **22** apart from activating the video camera **22.**

Referring to Fig. 2a and Fig. 7, when the user presses both release buttons **25** simultaneously against the respective compression springs **40,** the attachment knobs **37** move away from the center of the channel opening **52** and are released from the corresponding locking recesses **27,** such that the mounting clip **24** is unlocked from the mounting pin **26.** The movable magnetic member **30b** then moves back to the original position, breaking the electrical connection to **30a** and the video camera **22** switches off automatically. In one embodiment, the electronic circuitry is configured such that the video camera **22** also saves all previously recorded video data before switching off.

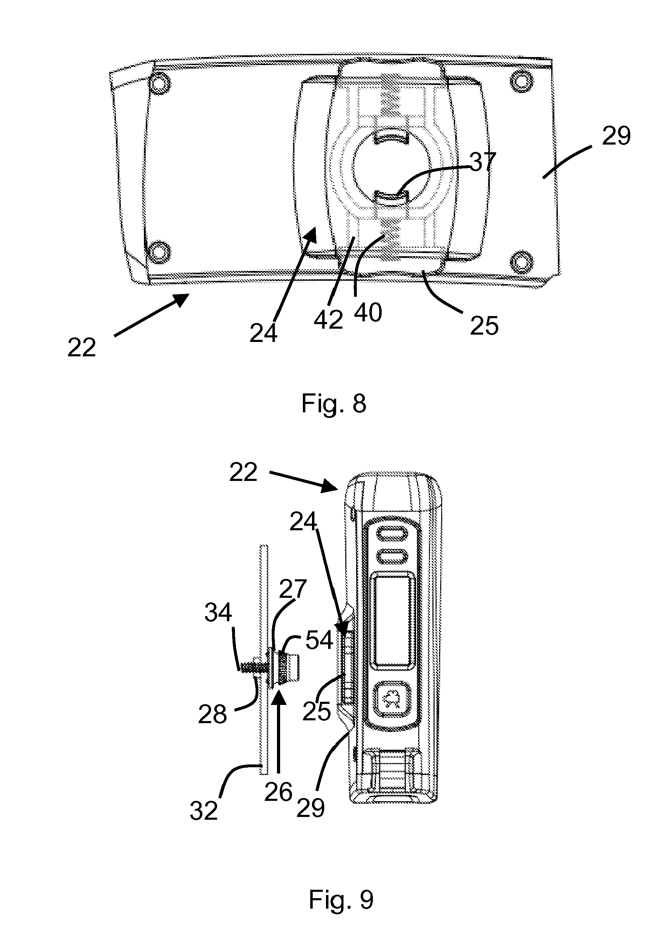

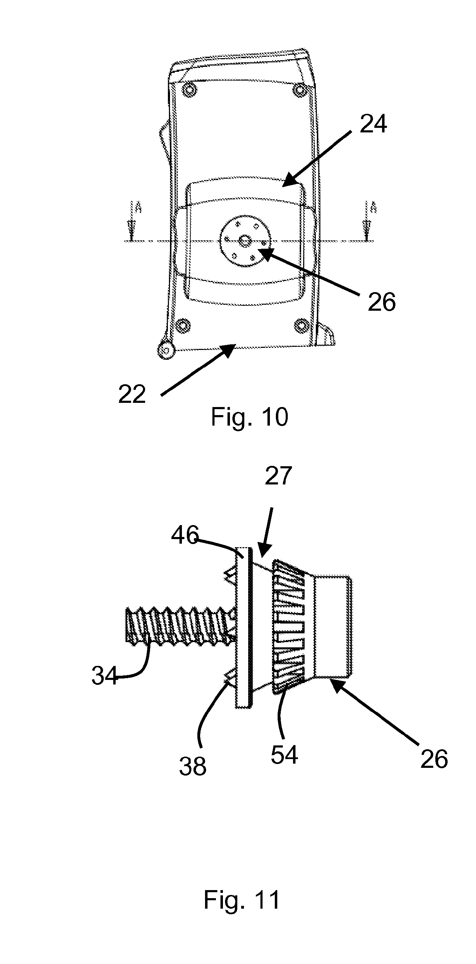

A second embodiment of the present invention is illustrated in Figs. 8-13. Referring first to Figs. 8-11, the mounting clip **24** of this embodiment is merged with the video camera **22** inside the video camera housing **29.** A plurality of locking cogs **54** extends radially from the mounting pin **26** at the receiving end. The two side walls of the locking recess **27** is defined by a base side of the locking cogs **54** and the pin base **46,** and the locking recess **27** is radially symmetrical as shown in Fig. 11. Other parts are similar to the embodiment described above in Figs. 1-7. A detailed description of the operation of this embodiment follows.

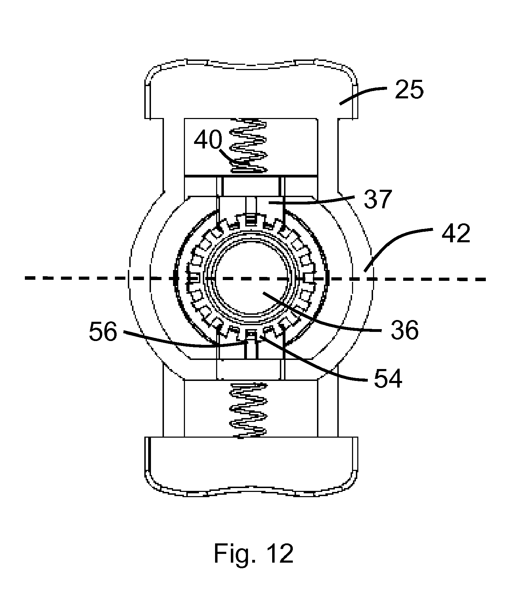

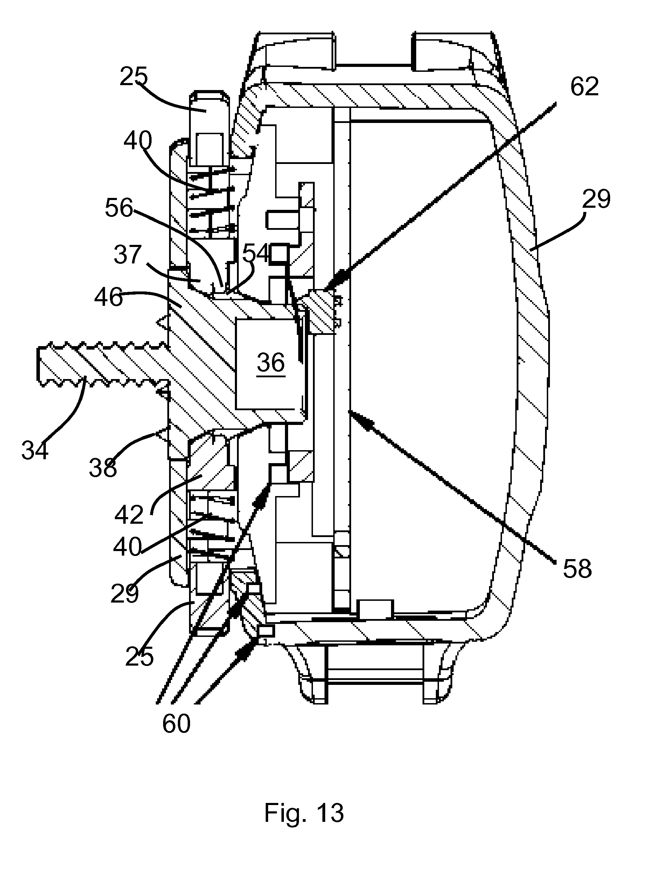

Refer now to Fig. 12 and 13. Fig. 12 shows the inside structure of the mounting clip **24** and the mounting pin **26** as viewed from the camera side, and Fig. 13 shows a cross sectional view of the structure along the line A-A in Fig. 10, both in the clipped position. A locking pin **56** is attached to an attachment frame **42** under the center of the attachment knob **37.** The locking pin **56** and the locking cogs **54** as shown in Fig. 11 makes up a positioning mechanism of the device. At the clipped position, the mounting pin **26** comes into physical contact with a mechanical switch **62.** As an example, the mechanical switch **62** has two conductive members initially in an off state. The mounting pin **26** pushes one of the conductive members into contact with the other conductive member to produce an on state that activates the video camera. The locking pin **56** is also mated with the locking cog **54** at one of a plurality of mating positions when the mounting pin **26** is clipped. At the mating position, the locking pin **56** is inserted between two locking cogs **54** such that the two sides of the locking pin **56** are engaged simultaneously. Therefore the mating prevents rotation of the video camera **22** and the orientation of the video camera **22** is fixed. Each mating position corresponds to an angle that the video camera **22** makes with the horizontal line, and a user can select the optimum camera orientation relative to the horizontal line by selecting the mating position. The attachment knob **37** is adapted to couple with the locking recess **27** to fix the position of the video camera **22.** When the release buttons **25** are pressed, both the locking pin **56** and the attachment knob **37** move away from the center of the channel opening **52** to release from the respective mated parts.

There are also a few differences between the two embodiments, which can be seen in the cross sectional views of Fig. 13 and Fig. 7. In the second embodiment, the magnet **36** is made larger in size such that the cylindrical channel **35** as shown in Fig. 7 is absent in Fig. 13. A plurality of O-rings **60** is also provided between components for water-proofing. The structures shown above in the embodiments are only specific implementations, and it is clear to one skilled in the art that other options can be used to achieve the same functionality, or different implementations shown in the two embodiments can be interchanged. In one embodiment, the cylindrical channel **35** and the locking cogs **54** are both present in the mounting pin **26.** Also, the first embodiment can use the mechanical switch **62** instead and the second embodiment can use the magnet switch **23** as the switching mechanism.

In one embodiment, an indicator corresponding to each of the mating positions is provided so that each mating position is distinguishable from others. Examples of indicators used are a number or a color code. When not attached to the video camera **22,** the user can refer to the indicator to identify the orientation of the video camera **22** if clipped. In another embodiment, a mechanism is provided such that the locking pin **56** can only mate with the locking cogs **54** at one mating position that is pre-selected by the user. In one embodiment, an additional component is attached to the mounting pin **26** that occupies all the spaces between the locking cogs **54** other than the pre-selected locking cogs **54** that corresponds to the pre-selected mating position. In another embodiment, the mounting pin **26** only has one possible mating position, and the receiving portion is rotatable around the center for the user to select the orientation of the mating position.

In one embodiment, there are three possible mating positions between the mounting pin **26** and the mounting clip **24.** The first mating position causes the video camera **22** to face parallel to the horizontal line as shown in Fig. 12. At the second mating position, the video camera **22** is tilted upwards relative to the horizontal line. The video camera **22** is tilted downwards relative to the horizontal line at the third mating position. In an embodiment, the second mating position corresponds to a two o'clock orientation, and the third mating position corresponds to a four o'clock orientation for the video camera **22.**

The exemplary embodiments of the present invention are thus fully described. Although the description referred to particular embodiments, it will be clear to one skilled in the art that the present invention may be practiced with variation of these specific details. Hence this invention should not be construed as limited to the embodiments set forth herein.

For example, the switching mechanism does not necessarily be a magnetic switching mechanism. The switch can be mechanical, a micro-switch, an optical or an infrared switch. Another embodiment uses a contact plate that physically bends or a button that is depressed to close the circuit when the recording device is clipped to the clothing accessory.

It is obvious that all circuits or switches that are closed by the switching mechanism can be similarly opened to achieve the same effect, as long as the state of the switch is changed. Also, the number of switches used, number of poles in the switch and the design of the circuitry are immaterial to this invention.

Although the coupling member as described in the above embodiments is made up of two components, it is clear to one skilled in the art that the coupling member can be made up of a single part or multiple parts. In one exemplary embodiment, the coupling member is a single part such as a spring-loaded clip.

A hat is used in the embodiments described above as the clothing accessory, but it is clear to one skilled in the art that such a video camera can attach to any clothing accessory or even non-clothing objects, as long as it can be securely attached to the object. For instance, such a video camera can be attached to a handle of bicycle to record while the user is riding the bicycle.

In one embodiment, the video camera **22** has additional components with different functions other than recording. The components include manual power button and recording activation button, an option button to select between manual activation or automatic activation, another option button to select a resolution or frame rate used for recording, a displaying showing the current settings to the user, an indicator notifying the user that recording is in progress, an infra-red receiver for remote control for powering or playback functions, a global positioning system module for tracking the location of a device" a connector to an external display for output, a memory device for storing recorded data, or any combinations of the above.

In one embodiment, the data recorded by the video camera **22** is encrypted such that only authorized users can view the data. Known encryption algorithms can be used for encrypting the data.

It is clear that other structures besides notches can be applied to this invention to hold the clipping member to the attachment member, like slots, pins, screws, or other structures that are able to achieve a secure attachment.

The attachment member can be attached to the clothing accessory in any methods as long as the attachment member is securely attached. Some examples are rivets, glue and solder.

## Claims

1. An electronic recording device comprising:
an electronic recording module having a switching mechanism; and
a coupling member coupled to said switching mechanism of said electronic recording module;
wherein said coupling member activates said electronic recording device via said switching mechanism automatically when said coupling member is clipped to a clothing accessory of a user.

2. The electronic recording device according to claim 1, wherein said switching mechanism comprises a magnet switch having an on state and an off state and said coupling member comprises a magnet; said magnet toggling said magnet switch from one state to another state to activate said electronic recording device automatically when said coupling member is clipped to said clothing accessory of said user.

3. The electronic recording device according to claim 1, wherein said electronic recording module further starts a recording process automatically when said coupling member is coupled to said clothing accessory of said user.

4. The electronic recording device according to claim 1, further comprising a positioning mechanism attached to said coupling member, said positioning mechanism allows said user to couple said electronic recording module to said clothing accessory of said user in a pre-selected mating position among a plurality of mating positions.

5. The electronic recording device according to claim 4, wherein said coupling member can only couple to said clothing accessory of said user in said pre-selected mating position.

6. The electronic recording device according to claim 4, wherein said positioning mechanism further comprises an indicator for each of said mating position to allow said user to distinguish each of said plurality of mating positions.

7. The electronic recording device according to claim 1, wherein said coupling member comprises:
an attachment member securely attached on said clothing accessory of said user; and
a clipping member attached to said electronic recording module;
wherein said electronic recording device is activated via said switching mechanism when said clipping member is clipped to said attachment member.

8. The electronic recording device according to claim 7, wherein said clipping member comprises a magnet switch having an open state and a closed state and said coupling member comprises a magnet; said magnet toggling said magnet switch from one state to another state to activate said electronic recording device automatically when said coupling member is clipped to said clothing accessory of said user..

9. The electronic recording device according to claim 7, further comprising a positioning mechanism having a first portion provided on said clipping member and a corresponding portion provided on said attachment member; said positioning mechanism further provided with a plurality of selectable mating positions between said first portion and said corresponding portion, wherein clipping said clipping member onto said attachment member automatically secures said electronic recording module onto said clothing accessory of said user in a pre-selected mating position among said plurality of selectable mating positions.

10. The electronic recording device according to claim 1, wherein said electronic recording module deactivates when said coupling member is released from said clothing accessory.

11. The electronic recording device according to claim 1, wherein said coupling member is decoupled to said clothing accessory when at least two releasing mechanisms are activated simultaneously.

12. The electronic recording device according to claim 1, wherein said electronic recording module further comprises a global positioning system module; said global positioning system module allows a user to track a location of said electronic recording device.

13. The electronic recording device according to claim 1, wherein said switching mechanism comprises a mechanical switch having an off state and an on state; said coupling member toggling said mechanical switch from one state to another state by contacting said mechanical switch to activate said electronic recording device automatically when said coupling member is clipped to said clothing accessory of said user.

14. An electronic recording device comprising
an electronic recording module;
an attachment member adapted for secure attachment onto a clothing accessory of a user;
a clipping member attached to said electronic recording module for clipping said electronic recording module onto said attachment member; and
a positioning mechanism having a first portion provided on said clipping member and a corresponding portion provided on said attachment member; said positioning mechanism further provided with a plurality of selectable mating positions between said first portion and said corresponding portion;
wherein clipping said clipping member onto said attachment member automatically secures said electronic recording module onto said clothing accessory of said user in a pre-selected mating position among said plurality of selectable mating positions.

15. The electronic recording device according to claim 14, further comprising an indicator corresponding to each of said mating position.
